# EUROPÄISCHE PATENTSCHRIFT

(11) **EP 1 811 216 B1**
(45) Veröffentlichungstag und Bekanntmachung des Hinweises auf die Patenterteilung: **16.07.2008**
(21) Anmeldenummer: 07000524.4
(22) Anmeldetag: 11.01.2007
(51) Int. Cl.: F16K 31/06

(54) **Betätigungsanordnung zum Betätigen einer Ventilanordnung**
Actuation assembly for actuating a valve assembly
Agencement d'actionnement destiné à l'actionnement d'un agencement d'aération

(30) Priorität: 23.01.2006 DE 102006003987
(43) Veröffentlichungstag der Anmeldung: 25.07.2007
(73) Patentinhaber: Prettl, Rolf, 72072 Tübingen (DE)
(72) Erfinder: Engel, Markus, 72419 Neufra (DE); Franke, Horst, Prof., 87534 Oberstaufen (DE)
(74) Vertreter: Steil, Christian

(56) Entgegenhaltungen:
- WO-A-20/05108840
- DE-U1- 9 200 549

## Beschreibung

Die vorliegende Erfindung betrifft eine Betätigungsanordnung zum Betätigen einer Ventilanordnung, mit einem Ventilstellglied, das mittels eines Linearaktuators in axialer Richtung zwischen einer ersten Stellposition und einer zweiten Stellposition bewegbar ist, und zwar insbesondere mittels eines Elektromagnetaktuators der oben bezeichneten Art.

Ein Elektromagnetaktuator der oben bezeichneten Art ist generell auch als Schaltmagnet bekannt und beispielsweise offenbart in "Kraftfahrtechnisches Taschenbuch", BOSCH, 25. Auflage, 2003, Seiten 142, 143.

Bei derartigen Elektromagnetaktuatoren ist zwischen dem Anker und einem so genannten Kern (der Teil einer magnetischen Rückschlusseinrichtung sein kann) ein Arbeitsluftspalt eingerichtet. Bei Erregung der Spulenanordnung wird auf den Anker eine Kraft ausgeübt, die von der Länge des Arbeitsluftspaltes abhängt. Die charakteristische Kraft-Weg-Kennlinie fällt generell quadratisch über dem Stellweg ab.

Der Anker ist innerhalb der Spulenanordnung in der Regel durch eine separate Führungshülse geführt, die amagnetisch ausgeführt ist. Einen wesentlichen Einfluss auf die Effektivität bzw. den Wirkungsgrad des Schaltmagneten hat auch der so genannte Schadluftspalt, d.h. der in der Regel als Ringspalt ausgebildete Spalt zwischen dem Anker und der magnetischen Rückschlusseinrichtung. Sofern eine a-magnetische Führungshülse in dem Schadluftspalt angeordnet ist, sind die magnetischen Eigenschaften verschlechtert.

Bei den Betätigungsanordnungen zum Betätigen einer Ventilanordnung ist es zum einen möglich, ein Ventilstellglied unmittelbar mit einem Ventilschieber zu koppeln.

Es gibt jedoch auch Ventilanordnungen, bei denen ein Ventilstellhebel zwischen einer ersten Ventilposition (erste Dichtposition) und einer zweiten Ventilposition (zweite Dichtposition) zu verschwenken ist, wie z.B. in Dokument WO 2005/108840.

Bei einer Betätigung solcher Ventilanordnungen ist es insbesondere schwierig, den Stellweg des verwendeten Linearaktuators auf den Hub des Hebels zwischen der ersten und der zweiten Ventilposition anzupassen.

Ferner ist es bei derartigen Ventilanordnungen häufig so, dass Dichtelemente des Ventilstellhebels mit der Zeit plastisch durch den Ventilsitz verformt werden. Hierdurch ergibt sich im Lauf der Zeit eine nachlassende Dichtwirkung.

Vor dem obigen Hintergrund ist es die Aufgabe der vorliegenden Erfindung eine verbesserte Betätigungsanordnung zum Betätigen einer Ventilanordnung anzugeben.

Gemäß der vorliegenden Erfindung wird die obige Aufgabe gelöst durch eine Betätigungsanordnung gemäß Anspruch 1, zum Betätigen einer Ventilanordnung, mit einem Ventilstellglied, das mittels eines Linearaktuators in axialer Richtung zwischen einer ersten Stellposition und einer zweiten Stellposition bewegbar ist, insbesondere mittels eines erfindungsgemäßen Elektromagnetaktuators, ferner mit einem Ventilstellhebel, der zum einen mit dem Ventilstellglied und zum anderen mit der Ventilanordnung gekoppelt und zwischen einer ersten Ventilposition und einer zweiten Ventilposition bewegbar ist, wobei der Ventilstellhebel mit dem Ventilstellglied über einen Schieber gekoppelt ist, der an dem Ventilstellglied in axialer Richtung zumindest begrenzt beweglich gelagert ist, wobei der Schieber in der ersten Stellposition des Ventilstellgliedes so vorgespannt ist, dass der Ventilstellhebel in die erste Ventilposition gedrückt ist, und wobei der Schieber in der zweiten Stellposition des Ventilstellgliedes so vorgespannt ist, dass der Ventilstellhebel in die zweite Ventilposition gedrückt ist.

Erfindungsgemäß wird die Betätigung des Ventilstellhebels mittels des Schiebers von der Betätigung des Ventilstellgliedes (in der Regel des Ankers des Linearaktuators) entkoppelt. Ferner wird durch geeignet eingerichtete Vorspannungen erzielt, dass der Ventilstellhebel in der einen wie in der anderen Richtung in die jeweilige Ventilposition gedrückt wird.

Die Betätigung des Ventilstellhebels erfolgt somit nicht mehr weggesteuert, sondern kraftgesteuert. Hierdurch kann der von dem Ventilstellhebel in den Ventilpositionen jeweils eingerichtete Dichtsitz selbstnachstellend ausgebildet werden. Selbst wenn sich ein Dichtelement des Ventilstellhebels im Laufe der Zeit plastisch verformt, wird durch das Andrücken auch nach langer Lebenszeit noch eine hinreichende Dichtwirkung erzielt. Dies gilt bei der erfindungsgemäßen Anordnung und Vorspannung des Schiebers für beide Ventilpositionen.

Somit eignet sich die erfindungsgemäße Betätigungsanordnung insbesondere für Ventile, wie Wegeventile, in Anlagen zur katalytischen Reduktion von Stickoxiden in Kraftfahrzeugen.

Derartige Anlagen sind als solche bekannt (vgl. Kraftfahrtechnisches Taschenbuch, BOSCH, 25. Auflage, Seiten 719-721).

Bei diesen Anlagen werden Stickoxide durch Ammoniak reduziert, das aus der an sich ungiftigen Trägersubstanz Harnstoff gewonnen wird.

Harnstoff hat als Fluid jedoch gewisse Nachteile, denn es verhält sich in mancher Hinsicht wie Wasser. Harnstoff kann gefrieren und dehnt sich beim Gefrieren zunächst etwas aus. Dadurch besteht die Gefahr, dass Leitungen, Ventile etc. bersten. Daher wird bei bereits bestehenden Systemen der gesamte Kreislauf beheizt. Dies führt dazu, dass die Batterie auch von Nutzfahrzeugen nach kurzer Zeit erschöpft ist.

Mit einer erfindungsgemäß zu betätigenden Ventilanordnung kann der Harnstoff aus den Leitungssystemen abgepumpt werden, zumindest dann, wenn die Temperaturen sehr niedrig sind, um ein Leitungsbersten zu verhindern.

Das hierbei verwendete Ventil in Form eines 4/2-Wegeventils verwendet vorzugsweise einen Dichthebel der erfindungsgemäßen Betätigungsanordnung, der an zwei gegenüberliegenden Seiten Dichtkörper aufweist, die mittels der Betätigungsanordnung gegen entsprechende Ventilsitze gedrückt werden.

Die obige Aufgabe wird gemäß dem zweiten Aspekt der Erfindung somit vollkommen gelöst.

Von besonderem Vorteil ist es bei der Betätigungsanordnung gemäß dem zweiten Aspekt der Erfindung, wenn das Ventilstellglied mittels erster Federmittel in die erste Stellposition vorgespannt ist.

Hierdurch wird zum einen eine Grundposition des Ventilstellgliedes eingerichtet, in der bei Verwendung eines Elektromagnetaktuators vorzugsweise ein Arbeitsluftspalt eingerichtet ist.

Ferner kann hierdurch erreicht werden, dass in dieser ersten Stellposition die ersten Federmittel den Schieber so vorspannen, dass der Ventilstellhebel in die erste Ventilposition gedrückt ist.

Bei einer weiteren bevorzugten Ausführungsform ist der Schieber in der ersten Stellposition des Ventilstellgliedes mittels zweiter Federmittel in Bezug auf das Ventilstellglied in eine Schiebergrundposition vorgespannt.

Dies ermöglicht es, die zweiten Federmittel zum Vorspannen des Schiebers in die zweite Stellposition zu verwenden, in der der Schieber sich generell aus der Schiebergrundposition löst.

So ist es von besonderem Vorteil, wenn die ersten Federmittel in axialer Richtung von einer Seite an dem Schieber angreifen, und wenn die zweiten Federmittel in axialer Richtung von der gegenüberliegenden Seite an dem Schieber angreifen.

Gemäß einer alternativen Ausführungsform greifen die ersten Federmittel unmittelbar an dem Ventilstellglied an und spannen dieses vor. Dabei ist es in der Regel so, dass der Schieber in Richtung der Vorspannung der ersten Federmittel von dem Ventilstellglied mitgenommen wird, beispielsweise mittels eines Flansches, einer Schulter oder Ähnlichem.

Insgesamt ist es ferner vorteilhaft, wenn die zweiten Federmittel stärker als die ersten Federmittel sind und wenn die zweiten Federmittel den Schieber gegen einen Anschlag an dem Ventilstellglied in die Schiebergrundposition drücken.

Dies ermöglicht zum einen eine definierte Lage des Schiebers in der Schiebergrundposition, und zwar dann, wenn der Linearaktuator unbetätigt ist.

Bevorzugt ist ferner eine Ausführungsform, bei der die ersten und die zweiten Federmittel im Wesentlichen gleich stark ausgebildet sind, also im Wesentlichen die gleiche Andruckkraft auf den Ventilstellhebel in die erste bzw. die zweite Ventilposition ausüben.

Der Begriff "Federmittel" ist im vorliegenden Zusammenhang breit zu verstehen und kann beispielsweise klassische mechanische Federn, wie Schraubenfedern oder Ähnliches, beinhalten. Der Begriff "Federmittel" soll jedoch auch andere elastische Einrichtungen, wie elastische Kunststoffelemente oder Ähnliches, umfassen.

Bei einer weiteren bevorzugten Ausführungsform stützen sich die ersten Federmittel an einem Flanschabschnitt einer gehäusefesten Führungshülse des Linearaktuators ab, beispielsweise an einer Führungshülse gemäß dem Elektromagnetaktuator gemäß dem ersten Aspekt der Erfindung.

Hierdurch kann eine exakte Führung der ersten Federmittel auf konstruktiv einfache Weise mit wenigen Bauteilen erzielt werden.

Auch ist es bevorzugt, wenn die zweiten Federmittel sich an einem Vorsprung am freien Ende des Ventilstellgliedes abstützen.

Dies ermöglicht, mit ähnlichen bzw. vergleichbaren Arten von Federmitteln eine Kraft in die entgegengesetzte Richtung auszuüben.

Dabei ist es vorteilhaft, wenn der Vorsprung durch eine Scheibe gebildet ist, die an einer Umfangsnut des Ventilstellgliedes festgelegt ist.

Bei dieser Ausführungsform kann die Scheibe nachträglich an dem Ventilstellglied montiert werden, um so eine Schulter zum Abstützen der zweiten Federmittel einzurichten.

Insgesamt ist es auch vorteilhaft, wenn der Schieber und/oder die Scheibe mit Federführungsansätzen zum Führen und/oder Halten der zweiten Federmittel versehen sind.

Dies ermöglicht eine exakte Führung der zweiten Federmittel und eine einfache Montage der erfindungsgemäßen Betätigungsanordnung.

Vorzugsweise weist die Scheibe an der den zweiten Federmitteln abgewandten Seite eine Ausnehmung zur Aufnahme einer Sicherungsscheibe auf, die im Wesentlichen kräftefrei seitlich in die Umfangsnut des Ventilstellgliedes eingeschoben ist.

Bei dieser Ausführungsform kann die Sicherungsscheibe im Wesentlichen kräftefrei montiert werden und wird anschließend gegenüber Herausfallen durch die axial verlaufenden Ränder der Ausnehmung gesichert.

Bei dieser Ausführungsform ist es auch einfach, die Scheibe wieder zu demontieren, im Vergleich beispielsweise zu Schnappscheiben oder Ähnlichem.

Gemäß einer weiteren bevorzugten Ausführungsform weist der Schieber eine im Längsschnitt etwa sanduhrförmige Aufnahme für den Ventilstellhebel auf.

Bei dieser Ausgestaltung der Aufnahme für den Ventilstellhebel kann konstruktiv auf einfache Weise gewährleistet werden, dass die Reibung zwischen dem Schieber und dem Ventilstellhebel bei Relativbewegungen geringgehalten wird. Ferner kann so auf einfache Weise eine gelenkige Kopplung realisiert werden.

Insgesamt ist es auch bevorzugt, wenn das Ventilstellglied mit dem Anker eines Elektromagnetaktuators verbunden ist, vorzugsweise durch den Anker des Elektromagnetaktuators gebildet bzw. einstückig mit diesem verbunden ist.

Die vorliegende Erfindung betrifft bevorzugt eine Betätigungs anordnung mit einer elektrisch erregbaren Spulenanordnung, einem in der Spulenanordnung axial verschiebbar gelagerten Anker aus weichmagnetischem Material, der bei Erregung der Spulenanordnung in axialer Richtung verschoben wird, und einer Führungshülse, die in der Spulenanordnung festgelegt ist und den Anker in axialer Richtung führt.

Dabei kann die Führungshülse aus magnetisierbarem Edelstahl hergestellt sein.

Obgleich die Verwendung einer magnetisierbaren Führungshülse auf den ersten Blick nachteilig erscheint, so offenbaren sich erfindungsgemäß doch eine Reihe von Vorteilen. So kommt es gerade bei Verwendung einer weichmagnetischen Führungshülse nicht zum so genannten "Kleben", also einem Phänomen, bei dem der Anker in radialer Richtung seitlich gegen einen Abschnitt einer zugeordneten äußeren Rückschlusseinrichtung angezogen wird (wobei der Schadluftspalt geschlossen wird).

Der Schadluftspalt ist erfindungsgemäß aufgrund der Verwendung des magnetisierbaren Materials für die Führungshülse der gesamte, in der Regel zylindrische, Spalt zwischen diesen Bauteilen. Die hierbei zwischen diesen Bauteilen auftretenden Kräfte werden hierdurch "homogenisiert" und über sehr viel größere Flächen verteilt.

Dies führt dazu, dass die - bei ansonsten gleichen Randbedingungen - auf den Anker ausübbaren Kräfte um bis zu 20 % höher sind als im Stand der Technik, bei dem Führungshülsen aus amagnetischem Material gebildet waren.

Die Aufgabe wird betreffend den ersten Aspekt der Erfindung somit vollkommen gelöst.

Von besonderem Vorteil ist es hierbei, wenn der Anker zumindest in dem Bereich seiner Außenfläche, an der er in der Führungshülse geführt ist, mit einer die Reibung reduzierenden Beschichtung, insbesondere mit Teflon®, beschichtet ist.

Dies führt gerade in Kombination mit der Verwendung einer Führungshülse aus weichmagnetischem Material zu überragenden Eigenschaften hinsichtlich des Wirkungsgrades.

Gemäß einer weiteren bevorzugten Ausführungsform weist die Führungshülse einen zylindrischen Führungsabschnitt, der in der Spulenanordnung festgelegt ist, und einen gegenüber der Spulenanordnung vorstehenden Flanschabschnitt auf.

Dies ermöglicht zum einen eine einfache und definierte Montage der Führungshülse. Zum anderen kann der Flanschabschnitt auch für weitere Aufgaben verwendet werden (siehe unten).

Auch ist es vorteilhaft, wenn der Anker gegenüber einer ersten Seite aus der Spulenanordnung herausragt und wenn die Spulenanordnung von einer magnetischen Rückschlusseinrichtung umgeben ist, die sich von der ersten Seite zu der gegenüberliegenden zweiten Seite der Spulenanordnung erstreckt.

Mittels einer solchen Rückschlusseinrichtung kann in an sich bekannter Weise das von der Spulenanordnung erzeugte magnetische Feld gebündelt werden.

Die Rückschlusseinrichtung kann ebenfalls aus einem weichmagnetischen Material hergestellt sein.

Gemäß einer weiteren bevorzugten Ausführungsform ist dabei zwischen dem Anker und der Rückschlusseinrichtung auf der zweiten Seite ein Arbeitsluftspalt eingerichtet.

Der Arbeitsluftspalt definiert den Arbeitshub des Ankers. Die Rückschlusseinrichtung kann dabei generell einteilig ausgeführt sein, ist jedoch vorzugsweise zweiteilig ausgeführt und beinhaltet im Bereich der zweiten Seite in der Regel einen so genannten Magnetkern, der vorzugsweise zumindest teilweise in die Spulenanordnung hineinragt.

Ferner ist es hierbei vorteilhaft, wenn der Anker zu der ersten Seite hin vorgespannt ist und wenn die Spulenanordnung dazu ausgelegt ist, bei Erregung den Anker gegen die Vorspannung auf die Rückschlusseinrichtung zu zu bewegen, um den Arbeitsluftspalt zu schließen.

Dies hat auch den Vorteil, dass der Anker eine entsprechende Vorspannung auf die Ventilanordnung ausüben kann, also beispielsweise bei nicht erregter Spulenanordnung auf ein Ventilglied, wie einen Ventilstellhebel, um dieses in eine Ventilposition (Dichtposition) anzudrücken.

Ferner ist es vorteilhaft, wenn der Anker in der vorgespannten Position tiefer in die Spulenanordnung hineinragt als die Führungshülse.

Generell wird durch diese Maßnahme vermieden, dass zwischen der Führungshülse und der Rückschlusseinrichtung ein magnetischer Kurzschluss eingerichtet wird. Die Führungshülse ist vorzugsweise in der Spulenanordnung generell so positioniert, dass ein solcher magnetischer Kurzschluss des Arbeitsluftspaltes ausgeschlossen ist.

Gemäß einer weiteren bevorzugten Ausführungsform ist die Breite des Schadluftspaltes kleiner als 0,1 mm, vorzugsweise kleiner als 0,05 mm.

Hierdurch kann insbesondere in Kombination mit der reibungsarmen Beschichtung des Ankers und der Ausführung der Führungshülse aus einem magnetisierbarem Material ein hoher Wirkungsgrad erzielt werden. Durch die geringe Breite des Schadluftspaltes ist ferner die Tendenz verhindert, dass der Anker innerhalb der Führungshülse kippt und sich einseitig an die Führungshülse anlegt.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Längsschnittansicht durch eine Betätigungsanordnung für eine Ventilanordnung gemäß einer Ausführungsform der vorliegenden Erfindung; und
- Fig. 2: eine schematische Längsschnittansicht durch eine alternative Ausführungsform einer erfindungsgemäßen Betätigungsanordnung.

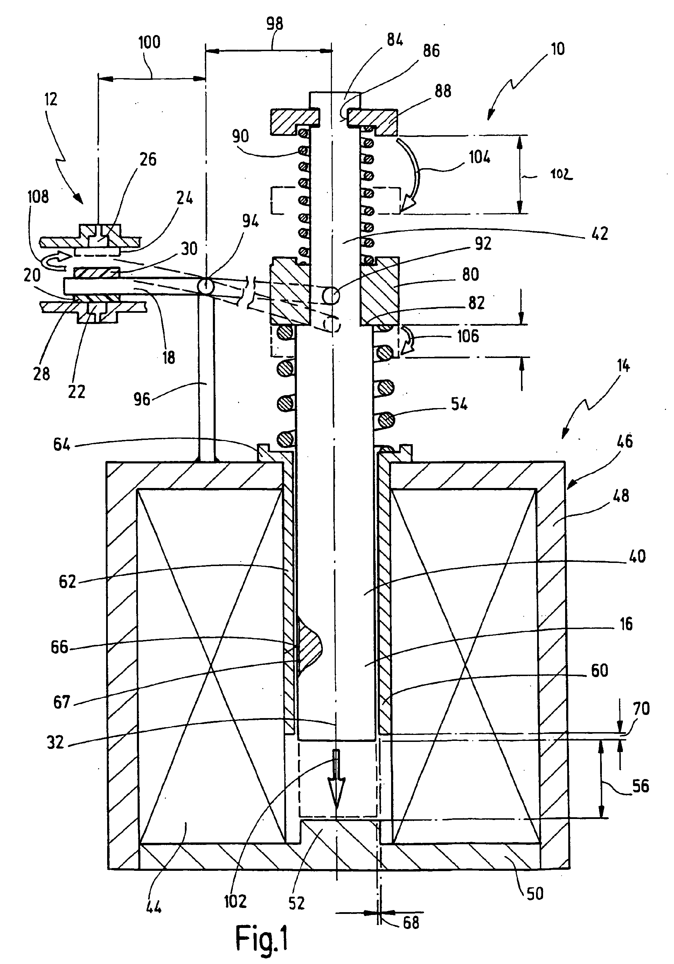

In Fig. 1 ist eine erste Ausführungsform einer erfindungsgemäßen Betätigungsanordnung generell mit 10 bezeichnet.

Die Betätigungsanordnung 10 dient zum Betätigen einer schematisch bei 12 gezeigten Ventilanordnung und weist einen Linearaktuator in Form eines erfindungsgemäßen Elektromagnetaktuators 14 auf.

Der Elektromagnetaktuator 14 ist nach der Art eines Schaltmagneten aufgebaut. Der Anker des Elektromagnetaktuators 14 ist als Ventilstellglied 16 ausgebildet. Das Ventilstellglied 16, das mittels des Elektromagnetaktuators 14 in axialer Richtung versetzbar ist, ist mit einem Ventilstellhebel 18 gekoppelt. Der Ventilstellhebel 18 ist zwischen einer ersten Ventilposition 20 und einer zweiten Ventilposition 24 bewegbar. In der ersten Ventilposition 20 liegt ein erstes Dichtungselement 28 an einem ersten Ventilsitz 22 der Ventilanordnung 12 an. In der zweiten Ventilposition 24 liegt ein zweites Dichtungselement 30, das an dem Ventilstellhebel 18 gegenüber dem ersten Dichtungselement 28 festgelegt ist, an einem zweiten Ventilsitz 26 der Ventilanordnung 12 an.

Die Längsachse, entlang der das Ventilstellglied 16 bewegbar ist, ist in Fig. 1 bei 32 gezeigt.

Das Ventilstellglied 16 weist einen Ankerabschnitt 40 und einen Betätigungsabschnitt 42 auf. Ferner weist der Elektromagnetaktuator 14 eine Spulenanordnung 44 auf, in die der Ankerabschnitt 40 nach der Art eines Tauchankers eingeführt ist. Der Betätigungsabschnitt 42 steht gegenüber der Spulenanordnung 44 vor. Die Spulenanordnung 44 ist beispielsweise als einfache gewickelte Spule ausgebildet.

Um die Spulenanordnung 44 herum ist eine magnetische Rückschlusseinrichtung 46 aus magnetisierbarem Material angeordnet. Die magnetische Rückschlusseinrichtung 46 weist einen Topf 48 auf, der die Spulenanordnung 44 an ihrem Außenumfang umgibt und eine erste, dem Betätigungsabschnitt 42 zugewandte Stirnseite der Spulenanordnung 44 bedeckt.

Die magnetische Rückschlusseinrichtung 46 weist ferner einen Deckel 50 auf, der die gegenüberliegende Stirnseite der Spulenanordnung 44 bedeckt bzw. sich über diese erstreckt. Der Deckel 50 weist einen Ansatz 52 auf, der von der zweiten Stirnseite aus in die Spulenanordnung 44 vorsteht, und bildet einen Magnetkern.

Das Ventilstellglied 16 ist mittels erster Federmittel 54 in eine Ruheposition vorgespannt. In der Ruheposition ist die Spulenanordnung 44 nicht elektrisch erregt, übt also keine Kraft auf den Ankerabschnitt 40 aus.

In der Ruheposition des Ventilstellgliedes 16 ist zwischen einer Stirnseite des Ankerabschnittes 40 und einer Stirnseite des Ansatzes 52 ein Arbeitsluftspalt 56 eingerichtet, der gleich dem Arbeitshub des Ventilstellgliedes 16 ist.

In die mit der Längsachse 32 ausgerichtete Längsöffnung der Spulenanordnung 44 ist ferner eine Führungshülse 60 eingeführt. Die Führungshülse 60 weist einen in der Spulenanordnung 44 festgelegten Führungsabschnitt 62 auf, der einen wesentlichen Abschnitt bzw. den größten Teil des Ankerabschnittes 40 umgibt.

Die Führungshülse 60 weist ferner einen mit dem Führungsabschnitt 62 verbundenen Flanschabschnitt 64 auf, der gegenüber der Spulenanordnung 44 vorsteht. Genauer gesagt steht der Flanschabschnitt 64 auch gegenüber dem Topf 48 vor und bildet eine abstützende Aufnahme für die ersten Federmittel 54, die im vorliegenden Fall als Schraubendruckfeder ausgebildet sind.

Der Führungsabschnitt 62 ist hohlzylinderförmig ausgebildet und umgibt den zylindrischen Ankerabschnitt 40. In jedem Fall sind die Querschnittsformen von Führungsabschnitt 62 und Ankerabschnitt 40 aneinander angepasst.

Eine Außenfläche 66 des Ankerabschnittes 40 (und gegebenenfalls auch des Betätigungsabschnittes 42) ist mit einer reibungsarmen Beschichtung 67 beschichtet, beispielsweise mit Teflon®.

Zwischen dem Außenumfang des Ankerabschnittes 40 und dem Innenumfang des Führungsabschnittes 62 ist ein ring- bzw. hohlzylinderförmiger Schadluftspalt 68 ausgebildet.

Die Breite des Schadluftspaltes 68 ist generell kleiner als 0,1 mm und vorzugsweise kleiner als 0,05 mm.

Der Abstand zwischen der Stirnseite des Ankerabschnittes 40 und dem Ansatz 52 (der Arbeitsluftspalt 56) ist kürzer als die Entfernung zwischen dem Ansatz 52 und dem stirnseitigen Ende der Führungshülse 60.

Die Führungshülse 60 ist erfindungsgemäß aus einem magnetisierbaren Material, wie beispielsweise magnetisierbarem Edelstahl, gebildet. Der Schadluftspalt 68 kann sehr klein gehalten werden, wie oben angegeben. Durch die Tatsache, dass die Führungshülse 60 weniger tief in die Spulenanordnung 44 eintaucht als der Ankerabschnitt 40 (der Abstand zwischen dem Ansatz 52 und der Führungshülse 60 ist größer als der Arbeitsluftspalt 56), kann ein magnetischer Kurzschluss zwischen der Führungshülse 60 und dem Deckel 50 verhindert werden.

Der Betätigungsabschnitt 42 des Ventilstellgliedes 16 weist einen ersten Abschnitt auf, um den herum die ersten Federmittel 54 in Form der Schraubendruckfeder angeordnet sind, und einen zweiten Abschnitt mit kleinerem Durchmesser. An dem Abschnitt mit kleinerem Durchmesser ist ein Schieber 80 in axialer Richtung verschiebbar gelagert.

Der Schieber 80 liegt in einer - in Fig. 1 gezeigten - Schiebergrundposition an einer Schulter 82 an, die den Übergang zwischen dem dickeren und dem dünneren Abschnitt des Betätigungsabschnittes 42 bildet.

An einem freien Ende 84 des Betätigungsabschnittes 42 ist eine Umfangsnut 86 vorgesehen, an der eine radial vorstehende Scheibe 88 festgelegt ist.

Zwischen der Scheibe 88 und dem Schieber 80 sind zweite Federmittel 90 in Form einer zweiten Schraubendruckfeder angeordnet. Die zweiten Federmittel 90 spannen den Schieber 80 generell in Richtung gegen die Schulter 82 vor, so dass der Schieber 80 in einer Grundposition generell daran anliegt.

Der Schieber 80 ist ferner über eine Kopplung (ein Gelenk) 92 mit dem Ventilstellhebel 18 gekoppelt.

Ferner ist der Ventilstellhebel 18 in einem Bereich zwischen dem Schieber 80 und der Ventilanordnung 12 mittels eines Lagers 94 gelagert. Das Lager 94 ist gehäusefest, wie es durch eine schematisch angedeutete Strebe 96 gezeigt ist.

Die Länge 98 zwischen dem Gelenk 92 und dem Lager 94 ist deutlich größer als die Länge 100 zwischen dem Lager 94 und der Ventilanordnung 12 (den Ventilsitzen 22, 26).

Der Arbeitshub des Ventilstellgliedes 16 ist bei 102 gezeigt. Er entspricht der Länge des Arbeitsluftspaltes 56. Der Arbeitshub der Scheibe 88 ist identisch hierzu.

Der Arbeitshub des Schiebers 80 ist bei 106 dargestellt, und der Arbeitshub des Ventilstellhebels 18 im Bereich der Ventilsitze 22, 26 ist bei 108 dargestellt.

Die Funktionsweise der Betätigungsanordnung 10 ist folgendermaßen.

In der in Fig. 1 mit durchgezogenen Linien dargestellten Grundposition ist der Schieber 80 mittels der zweiten Federmittel 90 gegen die Schulter 82 vorgespannt. Die ersten Federmittel 54 greifen von der entgegengesetzten Seite an dem Schieber 80 an. Die zweiten Federmittel 90 üben dabei eine größere Kraft aus als die ersten Federmittel 54, so dass das Ventilstellglied 16 insgesamt mittels der ersten Federmittel 54 aus der Spulenanordnung 44 herausgedrückt wird. Die Andruckkraft wird über den Ventilstellhebel 18 auf das erste Dichtungselement 28 übertragen, das in dieser Stellung mittels der ersten Federmittel 54 gegen den ersten Ventilsitz 22 angedrückt wird. Durch die Hebelwirkung (Länge 98 zu Länge 100) kann das erste Dichtungselement 28 mit einer vergleichsweise großen Kraft gegen den ersten Ventilsitz 22 angedrückt werden, um eine sichere Abdichtung zu erzielen.

Wenn die Spulenanordnung 44 mit Energie versorgt wird, also erregt wird, wird das Ventilstellglied 16 unter Überbrückung des Arbeitsluftspaltes 56 in die Spulenanordnung 44 hineingezogen, und zwar bis die Stirnseite des Ankerabschnittes 40 an der Stirnseite des Ansatzes 52 anstößt. Dabei werden die ersten Federmittel 54 komprimiert. Da die zweiten Federmittel 90 stärker sind (eine größere Federkonstante besitzen) als die ersten Federmittel 54, wird der Schieber 80 dabei zunächst mitgenommen, und der Ventilstellhebel 18 wird so bewegt, dass das Dichtungselement 28 von dem ersten Ventilsitz 22 abgehoben wird.

Im weiteren Verlauf der Bewegung des Ventilstellgliedes 16 stößt das zweite Dichtungselement 30 an dem zweiten Ventilsitz 26 an. Dies geschieht, bevor der Arbeitsluftspalt 56 vollständig überbrückt ist. Daher wird das Ventilstellglied 16 weiter bewegt, der Schieber 80 verbleibt jedoch in der so definierten Position, wobei nach wie vor eine Kraft mittels der zweiten Federmittel 90 auf den Schieber 80 ausgeübt wird, und zwar so, dass das zweite Dichtungselement 30 - über die Hebelwirkung 98/100 - an den zweiten Ventilsitz 26 angedrückt wird.

Die Ventilanordnung 12 kann beispielsweise Teil eines Wegeventils für eine Anordnung zur Stickoxidreduzierung sein, kann also zum Führen von Harnstoff geeignet sein.

Durch die großflächige Führung des magnetisierbaren Ventilstellgliedes 16 in der ebenfalls magnetisierbaren Führungshülse 60 kann der Schadluftspalt 68 sehr klein ausgebildet werden. Ferner werden die Feldlinien über eine sehr große Fläche verteilt, so dass insgesamt sehr hohe Kräfte auf den Ankerabschnitt 40 ausgeübt werden können. Ferner wird durch die exaktere Führung ein Kleben verhindert, wie es im Stand der Technik durch Verkippen des Ventilstellgliedes und Anziehen seitlich an den Topf geschehen kann.

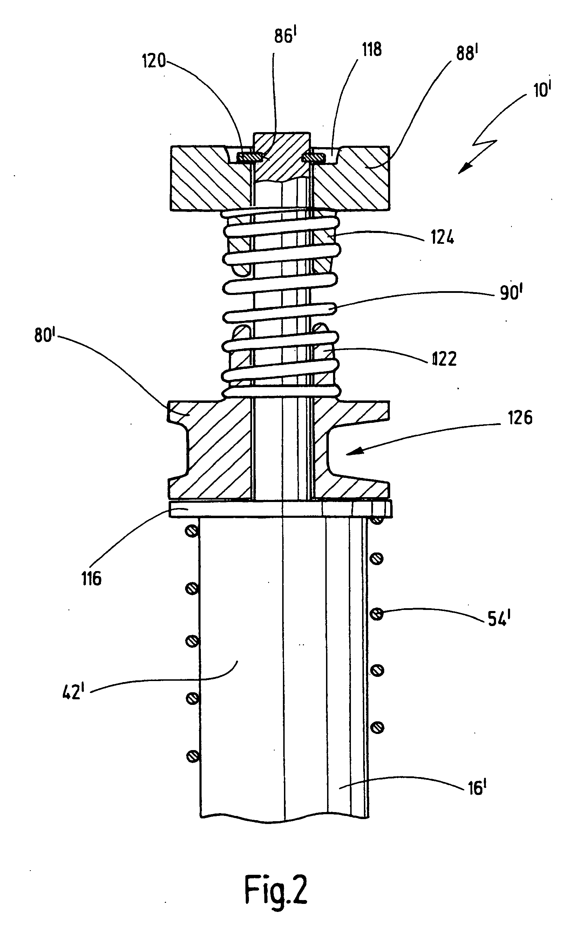

Fig. 2 zeigt eine alternative Ausführungsform einer erfindungsgemäßen Betätigungsanordnung 10'. Die Betätigungsanordnung 10' entspricht hinsichtlich Aufbau und Funktionsweise generell der Betätigungsanordnung 10 der Fig. 1. Im Folgenden werden lediglich die Unterschiede erläutert.

Bei der Betätigungsanordnung 10' wird das Ventilstellglied 16' mittels der ersten Federmittel 54' in eine Ruheposition gedrückt, wobei die ersten Federmittel 54' nicht an dem Schieber 80' angreifen, sondern an einem Flanschabschnitt 116 des Ventilstellgliedes 16'.

Durch diese Maßnahme ist es möglich, die von den ersten Federmitteln 54' und die von den zweiten Federmitteln 90' auf den Schieber 80' und damit auf den Ventilstellhebel 18 ausgeübten Kräfte aneinander anzugleichen, so dass an beiden Ventilsitzen 22, 26 der gleiche Anpressdruck erzielt wird.

Bei der Betätigungsanordnung 10' ist die Scheibe 88' ferner mittels einer Sicherungsscheibe 120 an dem Ventilstellglied 16' festgelegt. Genauer gesagt, weist die Scheibe 88' an ihrer den zweiten Federmitteln 90' abgewandten Seite eine Ausnehmung 118 auf. Die Sicherungsscheibe 120 kann im Wesentlichen kräftefrei in eine Umfangsnut 86' des Ventilstellgliedes 16' eingeschoben werden. Dies kann erfolgen, wenn die Scheibe 88' die zweiten Federmittel 90' so weit komprimiert, dass die Umfangsnut 86' freiliegt. Anschließend schnappt die Scheibe 88' zurück, so dass die Sicherungsscheibe 120 in der Ausnehmung 118 liegt und davor gesichert ist, seitlich wieder aus der Umfangsnut 86' herauszufallen.

Ferner ist bei der Betätigungsanordnung 10' sowohl an der Scheibe 88' als auch an dem Schieber 80' jeweils ein Federführungsabschnitt 124 bzw. 122 vorgesehen, mittels denen die zweiten Federmittel 90' in Form der Schraubendruckfeder geführt werden.

Zudem ist es möglich, dass der Schieber 80', die zweiten Federmittel 90' und die Scheibe 88' als eine Einheit vormontiert werden, die anschließend bei der Endmontage an dem Ventilstellglied 16' montiert wird, wie oben beschrieben.

Schließlich weist der Schieber 80' eine im Längsschnitt etwa sanduhrförmige Aufnahme 126 auf (von der in Fig. 2 lediglich eine Seite gezeigt ist).

Die Aufnahme 126 ist dazu geeignet, einen gabelförmigen Abschnitt eines Ventilstellhebels 18 aufzunehmen, der dann aufgrund der Ausgestaltung der Aufnahme 126 bei Bewegungen des Schiebers 80' reibungsfrei mitgenommen wird. Das relative Verkippen des Ventilstellhebels 18 wird dabei über die konisch zulaufenden Abschnitte der sanduhrförmigen Aufnahme 126 aufgenommen.

## Patentansprüche

1. Betätigungsanordnung (10) zum Betätigen einer Ventilanordnung (12), mit einem Ventilstellglied (16), das mittels eines Linearaktuators (14) in axialer Richtung (32) zwischen einer ersten Stellposition und einer zweiten Stellposition bewegbar ist, insbesondere mittels eines Elektromagnetakuators (14), wobei
ein Ventilstellhebel (18) vorgesehen ist, der zum einen mit dem Ventilstellglied (16) und zum anderen mit der Ventilanordnung (12) gekoppelt und zwischen einer ersten Ventilposition (20) und einer zweiten Ventil-position (24) bewegbar ist, **dadurch gekennzeichnet, dass** der Ventilstellhebel (18) mit dem Ventilstellglied (16) über einen Schieber (80) gekoppelt ist, der an dem Ventilstellglied (16) in axialer Richtung (32) zumindest begrenzt beweglich gelagert ist, wobei der Schieber (80) in der ersten Stellposition des Ventilstellgliedes (16) so vorgespannt ist, dass der Ventilstellhebel (18) in die erste Ventilposition (20) gedrückt ist, und wobei der Schieber (80) in der zweiten Stellposition des Ventilstellgliedes (16) so vorgespannt ist, dass der Ventilstellhebel (18) in die zweite Ventilposition gedrückt ist.

2. Betätigungsanordnung nach Anspruch 1, **dadurch gekennzeichnet, dass** das Ventilstellglied (16) mittels erster Federmittel (54) in die erste Stellposition vorgespannt ist.

3. Betätigungsanordnung nach Anspruch 1 oder 2, **dadurch gekennzeichnet, dass** der Schieber (80) in der ersten Stellposition des Ventilstellgliedes (16) mittels zweiter Federmittel (90) in Bezug auf das Ventilstellglied (16) in eine Schiebergrundposition vorgespannt ist.

4. Betätigungsanordnung nach Anspruch 2 und 3, **dadurch gekennzeichnet, dass** die ersten Federmittel (54) in axialer Richtung (32) von einer Seite an dem Schieber (80) angreifen, und dass die zweiten Federmittel (90) in axialer Richtung (32) von der gegenüberliegenden Seite an dem Schieber (80) angreifen.

5. Betätigungsanordnung nach Anspruch 2 oder 3, **dadurch gekennzeichnet, dass** die ersten Federmittel (54') unmittelbar an dem Ventilstellglied (16) angreifen.

6. Betätigungsanordnung nach Anspruch 2 und 3, **dadurch gekennzeichnet, dass** die zweiten Federmittel (90) stärker als die ersten Federmittel (54) sind und den Schieber (80) gegen einen Anschlag (82) an dem Ventilstellglied (16) in die Schiebergrundposition drücken.

7. Betätigungsanordnung nach einem der Ansprüche 2 bis 6, **dadurch gekennzeichnet, dass** sich die ersten Federmittel (54) an einem Flanschabschnitt (64) einer gehäusefesten Führungshülse (60) des Linearaktuators (14) abstützen.

8. Betätigungsanordnung nach einem der Ansprüche 3 bis 7, **dadurch gekennzeichnet, dass** die zweiten Federmittel (90) sich an einem Vorsprung (88) am freien Ende (84) des Ventilstellgliedes (16) abstützen.

9. Betätigungsanordnung nach Anspruch 8, **dadurch gekennzeichnet, dass** der Vorsprung (88) durch eine Scheibe (88) gebildet ist, die an einer Umfangsnut (86) des Ventilstellgliedes (16) festgelegt ist.

10. Betätigungsanordnung nach einem der Ansprüche 1 bis 9, **dadurch gekennzeichnet, dass** der Schieber (80) und/oder die Scheibe (88') mit Federführungsansätzen (122, 124) zum Führen und/oder Halten der zweiten Federmittel (90') versehen sind.

11. Betätigungsanordnung nach Anspruch 9 oder 10, **dadurch gekennzeichnet, dass** die Scheibe (88') an der den zweiten Federmitteln (90') abgewandten Seite eine Ausnehmung (118) zur Aufnahme einer Sicherungsscheibe (120) aufweist, die im Wesentlichen kräftefrei seitlich in die Umfangsnut (86') des Ventilstellgliedes (16') eingeschoben ist.

12. Betätigungsanordnung nach einem der Ansprüche 1 bis 11, **dadurch gekennzeichnet, dass** der Schieber (88') eine im Längsschnitt etwa sanduhrförmige Aufnahme (126) für den Ventilstellhebel (16) aufweist.

13. Betätigungsanordnung nach einem der Ansprüche 1 bis 11, **dadurch gekennzeichnet, dass** das Ventilstellglied (16) mit dem Anker (40) eines Elektromagnetaktuators (14) verbunden ist.

14. Betätigungsanordnung nach einem der Ansprüche 1-13, mit einer elektrisch erregbaren Spulenanordnung (44), einem in der Spulenanordnung (44) axial verschiebbar gelagerten Anker (16, 40) aus weichmagnetischem Material, der bei Erregung der Spulenanordnung (44) in axialer Richtung (32) verschoben wird, und einer Führungshülse (60), die in der Spulenanordnung (44) festgelegt ist und den Anker (16, 40) in axialer Richtung (32) führt, wobei die Führungshülse (60) aus einem weichmagnetischen Material hergestellt ist.

## Claims

1. Operating arrangement (10) for operation of a valve arrangement (12), having a valve control element (16) which can be moved by means of a linear actuator (14) in the axial direction (32) between a first actuating position and a second actuating position, in particular by means of an electromagnetic actuator (14) wherein a valve control lever (18) is provided, which is coupled on the one hand to the valve control element (16) and on the other hand to the valve arrangement (12) and can move between a first valve position (20) and a second valve position (24), **characterized in that** the valve control lever (18) is coupled to the valve control element (16) via a slide (80) which is mounted on the valve control element (16) such that it can be moved at least to a limited extent in the axial direction (32) with the slide (80) being prestressed in the first actuating position of the valve control element (16) such that the valve control lever (18) is forced to the first valve position (20), and with the slide (80) being prestressed in the second actuating position of the valve control element (16) such that the valve control lever (18) is forced to the second valve position.

2. Operating arrangement according to Claim 1, **characterized in that** the valve control element (16) is prestressed to the first actuating position by means of first spring means (54).

3. Operating arrangement according to Claim 1 or 2, **characterized in that** the slide (80) is prestressed to a slide basic position with respect to the valve control element (16) by means of second spring means (90) in the first actuating position of the valve control element (16).

4. Operating arrangement according to Claim 2 and 3, **characterized in that** the first spring means (54) act on the slide (80) from one side in the axial direction (32), and **in that** the second spring means (90) act on the slide (80) from the opposite side in the axial direction (32).

5. Operating arrangement according to Claim 2 or 3, **characterized in that** the first spring means (54') act directly on the valve control element (16).

6. Operating arrangement according to Claim 2 and 3, **characterized in that** the second spring means (90) are stronger than the first spring means (54), and force the slide (80) to the slide basic position against a stop (82) on the valve control element (16).

7. Operating arrangement according to one of Claims 2 to 6, **characterized in that** the first spring means (54) are supported on a flange section (64) of a guide sleeve (60), which is fixed to the housing, of the linear actuator (14).

8. Operating arrangement according to one of Claims 3 to 7, **characterized in that** the second spring means (90) are supported on a projection (88) at the free end (84) of the valve control element (16).

9. Operating arrangement according to Claim 8, **characterized in that** the projection (88) is formed by a disc (88) which is fixed on a circumferential groove (86) in the valve control element (16).

10. Operating arrangement according to one of Claims 1 to 9, **characterized in that** the slide (80) and/or the disc (88') are/is provided with spring guide attachments (122, 124) for guiding and/or holding the second spring means (90').

11. Operating arrangement according to Claim 9 or 10, **characterized in that** the disc (88') has a recess (118) for holding a locking washer (120) on the side facing away from the second spring means (90'), which locking washer (120) is inserted essentially without any force from the side into the circumferential groove (86') in the valve control element (16').

12. Operating arrangement according to one of Claims 1 to 11, **characterized in that** the slide (88') has a holder (126), whose longitudinal section has an approximately hourglass shape, for the valve control lever (16).

13. Operating arrangement according to one of Claims 1 to 11, **characterized in that** the valve control element (16) is connected to the armature (40) of an electromagnetic actuator (14).

14. Operating arrangement according to one of Claims 1 to 13, having a coil arrangement (44) which can be excited electrically, having an armature (16, 40) which is mounted such that it can move axially in the coil arrangement (44), is composed of soft-magnetic material and is moved in the axial direction (32) when the coil arrangement (44) is excited, and having a guide sleeve (60), which is fixed in the coil arrangement (44) and guides the armature (16, 40) in the axial direction (32), wherein the guide sleeve (60) is produced from soft-magnetic material.

## Revendications

1. Agencement d'actionnement (10) pour l'actionnement d'un agencement de soupape (12), comprenant un organe de commande de soupape (16) qui peut être déplacé dans la direction axiale (32) entre une première position de commande et une deuxième position de commande au moyen d'un actionneur linéaire (14), un levier de commande de soupape (18) étant prévu, lequel est accouplé d'une part à l'organe de commande de soupape (16) et d'autre part à l'agencement de soupape (12) et peut être déplacé entre une première position de soupape (20) et une deuxième position de soupape (24), **caractérisé en ce que** le levier de commande de soupape (18) est accouplé à l'organe de commande de soupape (16) par le biais d'un coulisseau (80), qui est monté de manière déplaçable au moins de façon limitée dans la direction axiale (32) sur l'organe de commande de soupape (16), le coulisseau (80) étant précontraint dans la première position de commande de l'organe de commande de soupape (16) de telle sorte que le levier de commande de soupape (18) soit poussé dans la première position de soupape (20), et le coulisseau (80) étant précontraint dans la deuxième position de commande de l'organe de commande de soupape (16) de telle sorte que le levier de commande de soupape (18) soit poussé dans la deuxième position de soupape.

2. Agencement d'actionnement selon la revendication 1, **caractérisé en ce que** l'organe de commande de soupape (16) est précontraint dans la première position de commande au moyen de premiers moyens de ressort (54).

3. Agencement d'actionnement selon la revendication 1 ou 2, **caractérisé en ce que** le coulisseau (80) dans la première position de commande de l'organe de commande de soupape (16) est précontraint par rapport à l'organe de commande de soupape (16) dans une position de base du coulisseau au moyen de deuxièmes moyens de ressort (90).

4. Agencement d'actionnement selon les revendications 2 et 3, **caractérisé en ce que** les premiers moyens de ressort (54) viennent en prise dans la direction axiale (32) depuis un côté avec le coulisseau (80), et **en ce que** les deuxièmes moyens de ressort (90) viennent en prise dans la direction axiale (32) depuis le côté opposé avec le coulisseau (80).

5. Agencement d'actionnement selon la revendication 2 ou 3, **caractérisé en ce que** les premiers moyens de ressort (54') viennent en prise directement avec l'organe de commande de soupape (16).

6. Agencement d'actionnement selon les revendications 2 et 3, **caractérisé en ce que** les deuxièmes moyens de ressort (90) sont plus solides que les premiers moyens de ressort (54) et pressent le coulisseau (80) contre une butée (82) sur l'organe de commande de soupape (16) dans la position de base du coulisseau.

7. Agencement d'actionnement selon l'une quelconque des revendications 2 à 6, **caractérisé en ce que** les premiers moyens de ressort (54) s'appuient sur une portion de bride (64) d'une douille de guidage (60), fixée au boîtier, de l'actionneur linéaire (14).

8. Agencement d'actionnement selon l'une quelconque des revendications 3 à 7, **caractérisé en ce que** les deuxièmes moyens de ressort (90) s'appuient sur une saillie (88) à l'extrémité libre (84) de l'organe de commande de soupape (16).

9. Agencement d'actionnement selon la revendication 8, **caractérisé en ce que** la saillie (88) est formée par une rondelle (88) qui est fixée à une rainure périphérique (86) de l'organe de commande de soupape (16).

10. Agencement d'actionnement selon l'une quelconque des revendications 1 à 9, **caractérisé en ce que** le coulisseau (80) et/ou la rondelle (88') sont pourvus de collets de guidage de ressort (122, 124) pour le guidage et/ou la fixation des deuxièmes moyens de ressort (90').

11. Agencement d'actionnement selon la revendication 9 ou 10, **caractérisé en ce que** la rondelle (88') présente, du côté opposé aux deuxièmes moyens de ressort (90'), un évidement (118) pour recevoir une rondelle de fixation (120), qui est enfoncée essentiellement sans force latéralement dans la rainure périphérique (86') de l'organe de commande de soupape (16').

12. Agencement d'actionnement selon l'une quelconque des revendications 1 à 11, **caractérisé en ce que** le coulisseau (80') présente un logement (126) approximativement en forme de sablier en coupe longitudinale, pour le levier de commande de soupape (18).

13. Agencement d'actionnement selon l'une quelconque des revendications 1 à 11, **caractérisé en ce que** l'organe de commande de soupape (16) est connecté à l'armature (40) d'un actionneur électromagnétique (14).

14. Agencement d'actionnement selon l'une quelconque des revendications 1 à 13, comprenant un agencement de bobine (44) à excitation électrique, une armature (16, 40) montée de manière déplaçable axialement dans l'agencement de bobine (44), en matériau magnétiquement doux, qui est déplacée dans la direction axiale (32) par excitation de l'agencement de bobine (44), et une douille de guidage (60), qui est fixée dans l'agencement de bobine (44), et qui guide l'armature (16, 40) dans la direction axiale (32), la douille de guidage (60) étant fabriquée en un matériau magnétiquement doux.
